# EUROPEAN PATENT APPLICATION

(11) **EP 3 754 562 A1**
(43) Date of publication of application: **23.12.2020**
(21) Application number: 19753995.0
(22) Date of filing: 11.02.2019
(51) Int. Cl.: G06N 3/08, H04L 29/06

(54) **METHOD, APPARATUS AND SYSTEM FOR PERFORMING MACHINE LEARNING BY USING DATA TO BE EXCHANGED**

(30) Priority: 13.02.2018 CN 201810148969
(71) Applicant: The Fourth Paradigm (Beijing) Tech Co Ltd, Beijing 100085 (CN)
(72) Inventor: CHEN, Yuqiang, Beijing 100085 (CN); DAI, Wenyuan, Beijing 100085 (CN); YANG, Qiang, Beijing 100085 (CN)
(74) Representative: Zimmermann, Tankred Klaus
(86) International application number: PCT/CN2019/074759
(87) International publication number: WO 2019/158027

(57) **Abstract**

Provided are method, apparatus and system for performing machine learning by using data to be exchanged. The apparatus comprises: a primary encryption data reception unit configured to respectively receive first primary encryption result data from a first data provider and receive second primary encryption result data from a second data provider; a primary encryption data transmission unit configured to respectively transmit the first primary encryption result data to the second data provider and transmit the second primary encryption result data to the first data provider; a secondary encryption data reception unit configured to respectively receive second secondary encryption result data from the first data provider and receive first secondary encryption result data from the second data provider; and a machine learning execution unit configured to obtain a machine learning sample and perform machine learning on the basis of the machine learning sample.

## Description

### TECHNICAL FIELD

Exemplary embodiments of the present disclosure generally relate to a machine learning field of artificial intelligence, and more particularly to a method, an apparatus and a system for performing machine learning by using data to be exchanged.

### BACKGROUND

With the development of technologies such as big data, cloud computing and artificial intelligence and so on, machine learning is widely used to mine hidden useful information from massive data.

In order to apply machine learning, it is usually necessary to learn from a given training data set to get a model function composed of features and parameters thereof which can be applied for new data when the new data arrives. In order to learn or apply the model better, it usually needs data from various aspects to participate in the process such as training, testing, or predicting and so on of the model. These data can be purchased from a corresponding data provider or obtained in other ways. For example, when banks perform business such as customer acquisition, anti-fraud and so on, it usually needs to perform machine learning in conjunction with various additional data. As an example, the additional data may include: mobile Internet behavior data (such as mobile phone number, address book data, mobile phone model, manufacturer, hardware information, APP used frequently, social sharing content and so on), mobile apparatus communication data (such as mobile phone number, address book data and call records), mobile operator data (such as mobile phone number, Internet browsing behavior and APP usage behavior).

In practice, in order to ensure at least one of data security and machine learning effects, a third party can be used to provide machine learning services by using data from various data providers. Correspondingly, respective data providers may provide encrypted data with a same key to the third party respectively, so that the third party can complete the data concatenating without obtaining the data plaintext, and perform machine learning based on the concatenating result. However, it should be noted that when the above-mentioned encrypted data is exchanged, it is easy to leak privacy information of a user or other information that is not suitable for disclosure due to collusion between the third party and a certain data provider, and the exchanged data can easily be reused or sold without authorization, and it is difficult to technically guarantee the legal use of data. For example, when a data provider in Internet application aspect provides its data to a third party to perform machine learning in conjunction with bank data, the data provider may worry that its users' privacy would be leaked for no reason, and may worry that the data would be reused or sold without authorization. On the other hand, a bank may also worry about at least one of the leak of data content and unauthorized use of data.

### SUMMARY

According to an exemplary embodiment of the present disclosure, there is provided an apparatus for performing machine learning by using data to be exchanged, comprising: a primary encryption data receiving unit configured to receive first primary encryption result data from a first data provider and receive second primary encryption result data from a second data provider respectively, wherein the first primary encryption result data is obtained by the first data provider encrypting first data to be exchanged by using a first encryption function, and the second primary encryption result data is obtained by the second data provider encrypting second data to be exchanged by using a second encryption function, wherein the first data to be exchanged at least partially corresponds to the second data to be exchanged; a primary encryption data transmitting unit configured to transmit the first primary encryption result data to the second data provider and transmit the second primary encryption result data to the first data provider respectively; a secondary encryption data receiving unit configured to receive second secondary encryption result data from the first data provider and receive first secondary encryption result data from the second data provider respectively, wherein the first secondary encryption result data is obtained by the second data provider encrypting the first primary encryption result data by using the second encryption function, and the second secondary encryption result data is obtained by the first data provider encrypting the second primary encryption result data by using the first encryption function; and a machine learning executing unit configured to obtain machine learning samples by concatenating the first secondary encryption result data and the second secondary encryption result data, and perform machine learning based on the machine learning samples.

According to another exemplary embodiment of the present disclosure, there is provided a method for performing machine learning by using data to be exchanged, comprising: receiving first primary encryption result data from a first data provider and receiving second primary encryption result data from a second data provider respectively, wherein the first primary encryption result data is obtained by the first data provider encrypting first data to be exchanged by using a first encryption function, and the second primary encryption result data is obtained by the second data provider encrypting second data to be exchanged by using a second encryption function, wherein the first data to be exchanged at least partially corresponds to the second data to be exchanged; transmitting the first primary encryption result data to the second data provider and transmitting the second primary encryption result data to the first data provider respectively; receiving second secondary encryption result data from the first data provider and receiving first secondary encryption result data from the second data provider respectively, wherein the first secondary encryption result data is obtained by the second data provider encrypting the first primary encryption result data by using the second encryption function, and the second secondary encryption result data is obtained by the first data provider encrypting the second primary encryption result data by using the first encryption function; and obtaining machine learning samples by concatenating the first secondary encryption result data and the second secondary encryption result data, and performing machine learning based on the machine learning samples.

According to another exemplary embodiment of the present disclosure, there is provided a system for performing machine learning, comprising: a first data provider configured to obtain first primary encryption result data by encrypting first data to be exchanged using a first encryption function; a second data provider configured to obtain second primary encryption result data by encrypting second data to be exchanged using a second encryption function, wherein the first data to be exchanged at least partially corresponds to the second data to be exchanged; a machine learning executing apparatus configured to receive the first primary encryption result data from the first data provider and receive the second primary encryption result data from the second data provider respectively, and transmit the first primary encryption result data to the second data provider and transmit the second primary encryption result data to the first data provider respectively, wherein the first data provider obtains second secondary encryption result data by encrypting the second primary encryption result data using the first encryption function, the second data provider obtains first secondary encryption result data by encrypting the first primary encryption result data using the second encryption function, and the machine learning executing apparatus receives the second secondary encryption result data from the first data provider and receives the first secondary encryption result data from the second data provider respectively, and obtains machine learning samples by concatenating the first secondary encryption result data and the second secondary encryption result data, to perform machine learning based on the machine learning samples.

According to another exemplary embodiment of the present disclosure, there is provided a method for performing machine learning, comprising: obtaining first primary encryption result data by encrypting first data to be exchanged using a first encryption function, by a first data provider; obtaining second primary encryption result data by encrypting second data to be exchanged using a second encryption function, by a second data provider, wherein the first data to be exchanged at least partially corresponds to the second data to be exchanged; receiving the first primary encryption result data from the first data provider and receiving the second primary encryption result data from the second data provider respectively, and transmitting the first primary encryption result data to the second data provider and transmitting the second primary encryption result data to the first data provider respectively, by a machine learning executing apparatus; obtaining second secondary encryption result data by encrypting the second primary encryption result data using the first encryption function, by the first data provider; obtaining first secondary encryption result data by encrypting the first primary encryption result data using the second encryption function, by the second data provider; receiving the second secondary encryption result data from the first data provider and receiving the first secondary encryption result data from the second data provider respectively, by the machine learning executing apparatus; and obtaining machine learning samples by concatenating the first secondary encryption result data and the second secondary encryption result data to perform machine learning based on the machine learning samples, by the machine learning executing apparatus.

According to another exemplary embodiment of the present disclosure, there is provided a computer-readable storage medium for performing machine learning by using data to be exchanged, wherein the computer-readable storage medium records computer programs for performing any one of the methods as described above.

According to another exemplary embodiment of the present disclosure, there is provided a computing device for performing machine learning by using data to be exchanged, comprising a storage component and a processor, wherein the storage component stores a computer executable instruction set, when executed by the processor, to perform any one of the methods as described above.

According to a method, an apparatus and a system for performing machine learning by using data to be exchanged of exemplary embodiments of the present disclosure, it can safely and reliably use external data to provide a machine learning service, not only to ensure that content of the data is not leaked, but also to prevent the data from being reused without authorization.

### BRIEF DESCRIPTION OF THE DRAWINGS

These and/or other aspects and advantages of exemplary embodiments of the present disclosure will become more apparent and be more easily understood from the following detailed description of the exemplary embodiments of the disclosure, taken in conjunction with the accompanying drawings.
FIG. 1 illustrates a block diagram of an apparatus for performing machine learning by using data to be exchanged, according to an exemplary embodiment of the present disclosure;
FIG. 2 illustrates a flowchart of a method for performing machine learning by using data to be exchanged, according to an exemplary embodiment of the present disclosure; and
FIG. 3 illustrates a schematic diagram of performing machine learning using data of data providers by a system for performing machine learning, according to an exemplary embodiment of the present disclosure.

### DETAILED DESCRIPTION

In order for those skills in the art to better understand the exemplary embodiments of the present disclosure, the exemplary embodiments of the present disclosure are further described in detail in conjunction with the accompanying drawings and specific embodiments below. It should be explained here that "and/or" appearing in the present disclosure indicates including three parallel situations. For example, "including A and/or B" indicates the following three parallel situations: (1) including A; (2) including B; (3) including A and B. For another example, "performing step one and/or step two" indicates the following three parallel situations: (1) performing step one; (2) performing step two; (3) performing step one and step two.

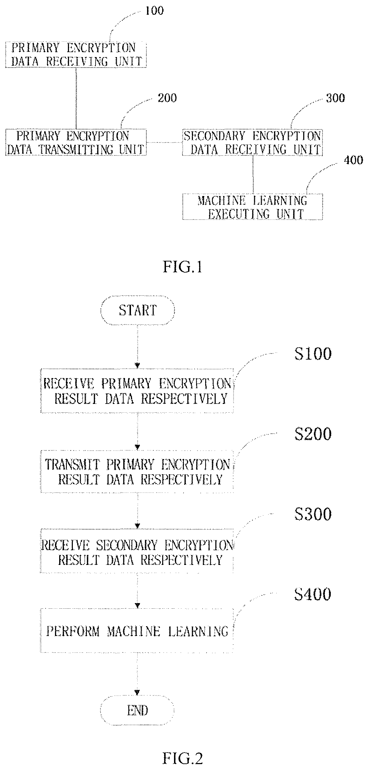

FIG. 1 illustrates a block diagram of an apparatus for performing machine learning by using data to be exchanged, according to an exemplary embodiment of the present disclosure.

Here, as an example, the apparatus for performing machine learning may exist outside of respective data providers relatively independently, and only be as a third party providing a machine learning service. Correspondingly, the apparatus may use data to be exchanged from the respective data providers (or further in conjunction with its own data) to perform training, testing or application of a machine learning model, thereby providing the machine learning model and/or corresponding prediction results for a certain prediction target to the outside, or the apparatus may directly apply the corresponding machine learning prediction results, for example, perform business such as customer acquisition and so on based on the machine learning prediction results.

Referring to FIG. 1, the apparatus for performing machine learning may include a primary encryption data receiving unit 100, a primary encryption data transmitting unit 200, a secondary encryption data receiving unit 300, and a machine learning executing unit 400. These units may be virtual units for executing corresponding computer program steps, or physical units having an entity structure, for example, a processing unit that runs corresponding program steps thereon or a module that performs operations under the control of the processing unit to achieve corresponding functions. As an example, at least some common components (for example, a interface) may be shared between these units, and even the functions of some virtual units may be combined in a single entity, for example, receiving and/or transmitting of primary encryption result data and/or secondary encryption result data is performed by the single entity.

Specifically, the primary encryption data receiving unit 100 is configured to receive first primary encryption result data from a first data provider and receive second primary encryption result data from a second data provider respectively, wherein the first primary encryption result data is obtained by the first data provider encrypting first data to be exchanged by using a first encryption function, and the second primary encryption result data is obtained by the second data provider encrypting second data to be exchanged by using a second encryption function, wherein the first data to be exchanged at least partially corresponds to the second data to be exchanged.

Here, as an example, the primary encryption data receiving unit 100 may receive the primary encryption result data generated by each of the first data provider and the second data provider from them via a network (for example, a cloud service network) respectively; or, the primary encryption data receiving unit 100 may receive respective primary encryption result data by connecting to respective data parties directly or via an intermediate apparatus. Here, each of data providers has its own data resources, and at least a part between the data has correspondence. For example, these data providers may have bank data, mobile operator data, Internet data, asset data, and credit data and so on about a specific user, respectively. Correspondingly, the first data provider and the second data provider may perform primary encryption on the first data to be exchanged and the second data to be exchanged respectively, wherein the first data to be exchanged and the second data to be exchanged at least partially correspond to each other. Here, the first data provider may perform primary encryption on the first data to be exchanged using the first encryption function, and the second data provider may perform primary encryption on the second data to be exchanged using the second encryption function. As an example, the first encryption function and the second encryption function are commutative functions that are private to the first data provider and the second data provider respectively and are not known to other parties.

The primary encryption data transmitting unit 200 is configured to transmit the first primary encryption result data to the second data provider and transmit the second primary encryption result data to the first data provider respectively.

Here, the primary encryption data transmitting unit 200 may transmit the primary encryption result data received by the primary encryption data receiving unit 100 to the respective data providers in an interchangeable manner. As an example, the primary encryption data transmitting unit 200 may reversely transmit the primary encryption result data in the same path as receiving the primary encryption result data. In this case, the primary encryption data transmitting unit 200 may be integrated with the primary encryption data receiving unit 100 in a single entity, and the entity is configured to perform operations for different transmission objects and transmission directions.

The secondary encryption data receiving unit 300 receives second secondary encryption result data from the first data provider and receives first secondary encryption result data from the second data provider respectively, wherein the first secondary encryption result data is obtained by the second data provider encrypting the first primary encryption result data by using the second encryption function, and the second secondary encryption result data is obtained by the first data provider encrypting the second primary encryption result data by using the first encryption function.

Here, the first data provider encrypts the second primary encryption result data again using its private first encryption function after receiving the second primary encryption result data transmitted by the primary encryption data transmitting unit 200, and the second data provider encrypts the first primary encryption result data again using its private second encryption function after receiving the first primary encryption result data transmitted by the primary encryption data transmitting unit 200. In the above manner, the first data provider may obtain the second secondary encryption result data, and the second data provider may obtain the first secondary encryption result data.

Correspondingly, the secondary encryption data receiving unit 300 may receive the secondary encryption result data generated by the respective data providers from them respectively. As an example, the secondary encryption data receiving unit 300 may receive the secondary encryption result data in the same path as receiving the primary encryption result data, in this case, the secondary encryption data receiving unit 300 may be integrated with the primary encryption data receiving unit 100 in a single entity, and the entity is configured to perform operations for different reception objects. In addition, as an example, the primary encryption data receiving unit 100, the primary encryption data transmitting unit 200, and secondary encryption data receiving unit 300 may be integrated in a single entity (for example, a transceiver), which is configured to perform corresponding data transmission and/or reception for different transmission objects and transmission directions.

The machine learning executing unit 400 is configured to obtain machine learning samples by concatenating the first secondary encryption result data and the second secondary encryption result data, and perform machine learning based on the machine learning samples.

Specifically, the machine learning executing unit 400 may generate the machine learning samples based on the first secondary encryption result data and the second secondary encryption data firstly. Here, as an example, the machine learning executing unit 400, in addition to concatenate both the first secondary encryption result data and the second secondary encryption result data based on the correspondence (for example, identification information) between the data to be exchanged of the respective data providers, may further concatenate other corresponding data (for example, data owned by the apparatus for performing machine learning). As described above, the data to be exchanged of the respective data providers describes attributes of an object in some aspects or a label for a certain prediction target. Correspondingly, the machine learning executing unit 400 may generate concatenate data records including corresponding attribute information and/or label information for respective identification information respectively, and may further obtain corresponding machine learning samples by performing feature processing such as feature extraction etc. on these concatenate data records. As an example, the machine learning executing unit 400 may train a machine learning model using the training samples in batches, after obtaining the training samples of machine learning, and alternatively, may further obtain test samples for measuring training results of the model to test the trained model during training the machine learning model. As another example, after the machine learning model is obtained (for example, the machine learning model has been trained), the machine learning executing unit 400 may obtain prediction samples for estimating the machine learning model, in order to use the machine learning model to give prediction results about the prediction target for the prediction samples, alternatively, after the prediction results are obtained, the machine learning executing unit 400 may further apply such the prediction results, for example, perform a business such as customer acquisition and so on based on the prediction results.

As described above, the machine learning executing unit 400 may perform training, testing, and/or predicting of the machine learning model, thereby providing the machine learning model and/or the prediction results to the outside, and alternatively further applying the prediction results.

It can be seen that the apparatus for performing machine learning shown in FIG. 1 may provide a machine learning service using external data, which not only ensures the security of the data content of respective data providers, but also prevents the data from being used without authorization.

FIG. 2 illustrates a flowchart of a method for performing machine learning by using data to be exchanged, according to an exemplary embodiment of the present disclosure. As an example, the method shown in FIG. 2 may be performed by the apparatus shown in FIG. 1 or by other computing devices. For example, the method may be performed by running corresponding computer programs.

Referring to FIG. 2, in step S100, first primary encryption result data is received from a first data provider and second primary encryption result data is received from a second data provider respectively, wherein the first primary encryption result data is obtained by the first data provider encrypting first data to be exchanged by using a first encryption function, and the second primary encryption result data is obtained by the second data provider encrypting second data to be exchanged by using a second encryption function, wherein the first data to be exchanged at least partially corresponds to the second data to be exchanged.

Here, the first data provider and the second data provider have a part of data to be exchanged to a third party to perform machine learning respectively. Moreover, the first data to be exchanged owned by the first data provider and the second data to be exchanged owned by the second data provider at least partially correspond to each other, that is, at least a part of objects targeted by the first data to be exchanged and the second data to be exchanged are consistent. Here, both the first data to be exchanged and the second data to be exchanged may have one or more data records, and each data record may have its own identification information, which may be used to concatenate at least a part of data records having same identification information between different sets of data to be exchanged. In addition, data records from different data providers may carry attributes of an object in certain aspects or a label for a prediction target. As an example, each first data record to be exchanged among the first data to be exchanged may include at least identification information and attribute information, and each second data record to be exchanged among the second data to be exchanged may include at least identification information and label information about a machine learning target. In addition, the second data to be exchanged may further include some attribute information. In this case, the second data provider may wish to use the attribute information of the first data provider to better mine rules about the machine learning target.

Correspondingly, the first primary encryption result data may be received from the first data provider, and the second primary encryption result data may be received from the second data provider. Here, the first primary encryption result data and the second primary encryption result data may be received simultaneously or asynchronously in any order. Specifically, the first primary encryption result data is obtained by the first data provider encrypting first data to be exchanged by using a first encryption function, and the second primary encryption result data is obtained by the second data provider encrypting second data to be exchanged by using a second encryption function. Here, as an example, the first encryption function is a private function of the first data provider, the second encryption function is a private function of the second data provider, and the first encryption function and the second encryption function constitute one-way commutative private functions. Alternatively, the first encryption function may be a first power function with a first private big prime number, and the second encryption function may be a second power function with a second private big prime number, thereby further ensuring that the encryption results cannot be cracked.

Next, in step S200, the first primary encryption result data is transmitted to the second data provider and the second primary encryption result data is transmitted to the first data provider, respectively. Here, after receiving the first primary encryption result data, the received first primary encryption result data may be transmitted to the second data provider, and, after receiving the second primary encryption result data, the received second primary encryption result data may be transmitted to the first data provider. It should be noted that the exemplary embodiments of the present disclosure do not do any restrictions on the timing and order of forwarding the primary encryption result data to the other party.

Then, in step S300, second secondary encryption result data is received from the first data provider and first secondary encryption result data is received from the second data provider respectively, wherein the first secondary encryption result data is obtained by the second data provider encrypting the first primary encryption result data by using the second encryption function, and the second secondary encryption result data is obtained by the first data provider encrypting the second primary encryption result data by using the first encryption function.

Here, the first data provider encrypts the second primary encryption result data again by using its own first encryption function to obtain the second secondary encryption result data after receiving the second primary encryption result data, and the second data provider encrypts the first primary encryption result data again by using its own second encryption function to obtain the first secondary encryption result data after receiving the first primary encryption result data.

Correspondingly, in this step, the second secondary encryption result data may be received from the first data provider, and the first secondary encryption result data may be received from the second data provider. Here, the first secondary encryption result data and the second secondary encryption result data may be received simultaneously or asynchronously in any order.

In step S400, machine learning samples are obtained by concatenating the first secondary encryption result data and the second secondary encryption result data, and machine learning is performed based on the machine learning samples.

Here, since the first data to be exchanged on which the first secondary encryption result data is based and the second data to be exchanged on which the second secondary encryption result data is based at least partially correspond to each other, a concatenate data record which extends attribute information may be obtained by concatenating the first secondary encryption result data and the second secondary encryption result data. As an example, the concatenate data record may additionally include other information (for example, attribute information among data records held by the apparatus for performing machine learning itself and so on). After obtaining the machine learning samples, corresponding machine learning processing may be performed, for example, a machine learning model is trained based on the machine learning training samples; a progress of model training is controlled based on the machine learning test samples; a predicting service is performed by applying the machine learning model based on machine learning prediction samples. In addition, in this step, the prediction results of the machine learning model may also be directly applied, for example, in a customer acquisition business, promotion activities and so on are conducted for the predicted potential customers. That is, in this step, the machine learning samples may be machine learning training samples, machine learning test samples, or machine learning prediction samples, correspondingly, a machine learning model may be trained based on the machine learning samples, the machine learning model may be tested based on the machine learning samples, or predictions may be performed using the machine learning model based on the machine learning samples.

It can be seen that in the method for performing machine learning by using data to be exchanged according to an exemplary embodiment of the present disclosure, the data providers only uses its own private function to perform encryption throughout the process, and the private function is a secret to other parties. Moreover, the provider of the machine learning service can only access the encrypted result data, and the encryption functions of different data providers are independent and secret from each other. In this case, performing machine learning based on external data can ensure the security of the data and limit the situation of using the data without authorization.

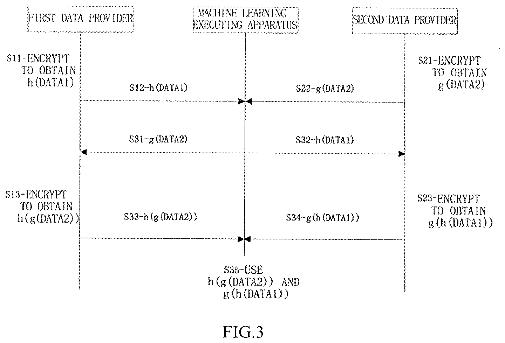

FIG. 3 illustrates a schematic diagram of performing machine learning by using data of data providers by a system for performing machine learning, according to an exemplary embodiment of the present disclosure.

Referring to FIG. 3, the system for performing machine learning according to an exemplary embodiment of the present disclosure may include a first data provider, a second machine learning provider, and a machine learning executing apparatus. In the process shown in FIG. 3, the "first data provider" is the data providing apparatus of the first data provider specifically, and the "second data provider" is the data providing apparatus of the second data provider specifically.

In the system shown in FIG. 3, both the first data provider and the second data provider have their own data to be exchanged. Here, "exchange" refers to the sharing behavior taken for the purpose of performing data mining extensively, including but not limited to the process of transmitting data from a provider to an acquirer. Here, the provider refers to a provider of the data to be exchanged, and may be a direct or indirect source of the data to be exchanged; the acquirer refers to a service provider who desires to obtain the data to be exchanged to perform machine learning based on the obtained data of various parties.

In the following description, for easily understanding, the following situation may be used as an application example rather than a restrictive description: the first data provider is an Internet data provider, and the data owned by which describes a user's web browsing behavior, while the second data provider is a bank, and the data owned by which describes a customer acquisition result (for example, label) whether the user becomes a bank customer. As an example, the bank's data may further include other attributes of the user. It should be understood that the customer acquisition business is only used as an example, not to limit the exemplary embodiment of the present disclosure. In fact, the exemplary embodiment of the present disclosure may be applied to any situation where machine learning is performed based on data of a plurality of parties, for example, a business such as anti-fraud, recommendation and so on.

Specifically, the first data provider is configured to obtain first primary encryption result data by encrypting first data to be exchanged using a first encryption function. Specifically, in step S11, for the first data to be exchanged DATA1, the first data provider may encrypt it using its private encryption function h(x) to obtain the first primary encryption result data h(DATA1). As an example, it is assumed that any data record Xn (n is a natural number) in DATA1 may include identification information kn and at least one attribute information fn1, fn2, fn3...fnm (where m is an integer greater than or equal to 1), correspondingly, h(Xn)= h(kn)h(fn1)h(fn2)h(fn3)...h(fnm). As an example, h(x) = a ∗ x%p, or, h(x) = x^{a}%p, wherein a is a big prime number private to the first data provider, and p is a shared big prime number.

The second data provider is configured to obtain second primary encryption result data by encrypting second data to be exchanged using a second encryption function. Specifically, in step S21, for the second data to be exchanged DATA2, the second data provider may encrypt it using its private encryption function g(x) (here, g(x) and h(x) constitute one-way commutative private functions) to obtain the second primary encryption result data g(DATA2). As an example, it is assumed that any data record Yj (j is a natural number) in DATA2 may include identification information kj and label information lj about the prediction target, and correspondingly, g(Yj)= g(kj)g(lj). As an example, g(x) = b ∗ x%p, or g(x) = x^{b}%p, wherein b is a big prime number private to the second data provider, and p is a shared big prime number. Here, it should be noted that the data records among the second data to be exchanged owned by the second data provider may also include other attribute information in addition to the identification information and the label information.

The machine learning executing apparatus is configured to receive the first primary encryption result data from the first data provider and receive the second primary encryption result data from the second data provider respectively, and transmit the first primary encryption result data to the second data provider and transmit the second primary encryption result data to the first data provider respectively. Specifically, in step S12, the machine learning executing apparatus receives the first primary encryption result data h(DATA1) transmitted from the first data provider, and in step S22, the machine learning executing apparatus receives the second primary encryption result data g(DATA2) transmitted from the second data provider. Thereafter, the machine learning executing apparatus transmits the second primary encryption result data g(DATA2) received from the second data provider to the first data provider in step S31, and transmits the first primary encryption result data h(DATA1) received from the first data provider to the second data provider in step S32.

Next, in step S13, the first data provider obtains second secondary encryption result data h(g(DATA2)) by encrypting the second primary encryption result data g(DATA2) using the first encryption function h(x), correspondingly, in step S23, the second data provider obtains the first secondary encryption result data g(h(DATA1)) by encrypting the first primary encryption result data h(DATA1) using the second encryption function g(x).

Next, in step S33, the machine learning executing apparatus receives the second secondary encryption result data h(g(DATA2)) transmitted from the first data provider, and in step S34, the machine learning executing apparatus receives the first secondary encryption result data g(h(DATA1)) transmitted from the second data provider.

Here, it should be noted that the exemplary embodiments of the present disclosure do not limit the path of data transmission. For example, the data transmission may be performed by cloud services, for example, in a network deployment of such as a public cloud or a private cloud, and data transmission may also be completed by direct interconnection by apparatuses or interconnection via intermediary media. In addition, the time sequence of the above steps is not limited by the sequence shown in FIG. 3, for example, the time sequence of encryption performed by the first data provider and the second data provider is not limited, and the machine learning executing apparatus may also transmit data with the first data provider and the second data provider simultaneously or asynchronously.

Finally, in step S35, the machine learning executing apparatus obtains machine learning samples by concatenating the first secondary encryption result data g(h(DATA1)) and the second secondary encryption result data h(g(DATA2)) to perform machine learning based on the machine learning samples. Here, as an example, the concatenating between the data may be completed through encrypted identification information, that is, identification information encryption results with the same content may represent the corresponding data records, and the machine learning executing apparatus may concatenate such corresponding data records to obtain a concatenate data record with additional attribute information and/or label information. Alternatively, the corresponding machine learning samples may be obtained by performing feature processing such as feature extraction etc. on such concatenate data records, so that training, testing, or predicting of the machine learning model may be performed further.

It should be understood that apparatuses illustrated in FIG. 1 and FIG.3 may be respectively configured as software, hardware, firmware, or any combination of the above for performing specific functions. For example, these apparatuses and their components may correspond to dedicated integrated circuits, may also correspond to pure software codes, and may further correspond to units or modules that are combination of software and hardware.

Based on the content disclosed in FIGS. 1-3, an embodiment of the present disclosure further provides a data providing apparatus, comprising at least one computing device and at least one storage device storing instructions, wherein the instructions, when executed by the at least one computing device, cause the at least one computing device to perform the following steps: encrypting first data to be exchanged by using a first encryption function to obtain first primary encryption result data, transmitting the first primary encryption result data to a machine learning executing apparatus, receiving second primary encryption result data from the machine learning executing apparatus, encrypting the second primary encryption result data by using the first encryption function to obtain second secondary encryption result data, and transmitting the second secondary encryption result data to the machine learning executing apparatus; or, encrypting second data to be exchanged by using a second encryption function to obtain the second primary encryption result data, transmitting the second primary encryption result data to the machine learning executing apparatus, receiving the first primary encryption result data from the machine learning executing apparatus, encrypting the first primary encryption result data by using the second encryption function to obtain first secondary encryption result data, and transmitting the first secondary encryption result data to the machine learning executing apparatus.

In the data providing apparatus provided by the embodiment of the present disclosure, alternatively, each first data record to be exchanged among the first data to be exchanged includes at least identification information and attribute information; each second data record to be exchanged among the second data to be exchanged includes at least identification information and label information about a machine learning target.

In the data providing apparatus provided by the embodiment of the present disclosure, alternatively, the first encryption function is a private function of a first data provider, the second encryption function is a private function of a second data provider, and the first encryption function and the second encryption function constitute one-way commutative private functions.

In the data providing apparatus provided by the embodiment of the present disclosure, alternatively, the first encryption function is a first power function with a first private big prime number, and the second encryption function is a second power function with a second private big prime number.

Based on the content disclosed in FIGS. 1-3, an embodiment of the present disclosure further provides a data providing method performed by a computing device, comprising: encrypting first data to be exchanged by using a first encryption function to obtain first primary encryption result data, transmitting the first primary encryption result data to a machine learning executing apparatus, receiving second primary encryption result data from the machine learning executing apparatus, encrypting the second primary encryption result data by using the first encryption function to obtain second secondary encryption result data, and transmitting the second secondary encryption result data to the machine learning executing apparatus; or, encrypting second data to be exchanged by using a second encryption function to obtain second primary encryption result data, transmitting the second primary encryption result data to the machine learning executing apparatus, receiving the first primary encryption result data from the machine learning executing apparatus, encrypting the first primary encryption result data by using the second encryption function to obtain first secondary encryption result data, and transmitting the first secondary encryption result data to the machine learning executing apparatus.

In the data providing method provided by the embodiment of the present disclosure, alternatively, each first data record to be exchanged among the first data to be exchanged includes at least identification information and attribute information; each second data record to be exchanged among the second data to be exchanged includes at least identification information and label information about a machine learning target.

In the data providing method provided by the embodiment of the present disclosure, alternatively, the first encryption function is a private function of a first data provider, the second encryption function is a private function of a second data provider, and the first encryption function and the second encryption function constitute one-way commutative private functions.

In the data providing method provided by the embodiment of the present disclosure, alternatively, the first encryption function is a first power function with a first private big prime number, and the second encryption function is a second power function with a second private big prime number.

The apparatus, method, and system for performing machine learning by using data to be exchanged according to the exemplary embodiments of the present disclosure have been described above with reference to FIGS. 1 to 3. It should be understood that the above methods may be implemented by programs recorded on a computer-readable storage medium, and correspondingly, according to an exemplary embodiment of the present disclosure, a computer-readable storage medium for performing machine learning by using data to be exchanged may be provided, wherein computer programs for performing the following method steps are recorded on the computer-readable storage medium: (A) receiving first primary encryption result data from a first data provider and receiving second primary encryption result data from a second data provider respectively, wherein the first primary encryption result data is obtained by the first data provider encrypting first data to be exchanged by using a first encryption function, and the second primary encryption result data is obtained by the second data provider encrypting second data to be exchanged by using a second encryption function, wherein the first data to be exchanged at least partially corresponds to the second data to be exchanged; (B) transmitting the first primary encryption result data to the second data provider and transmitting the second primary encryption result data to the first data provider respectively; (C) receiving second secondary encryption result data from the first data provider and receiving first secondary encryption result data from the second data provider respectively, wherein the first secondary encryption result data is obtained by the second data provider encrypting the first primary encryption result data by using the second encryption function, and the second secondary encryption result data is obtained by the first data provider encrypting the second primary encryption result data by using the first encryption function; and (D) obtaining machine learning samples by concatenating the first secondary encryption result data and the second secondary encryption result data, and performing machine learning based on the machine learning samples.

The computer programs in the computer-readable storage medium described above may run in an environment deployed in a computer apparatus such as a client, a host, an agent device, a server and so on. It should be noted that the computer programs may also be used to perform additional steps in addition to the above steps or perform more specific processing when the above steps are performed. These additional steps and content of further processing have been described with reference to FIGS. 1 to 3, and would not be repeated here to avoid repetition.

In addition, the exemplary embodiments of the present disclosure may also be implemented as a computing device including a storage component and a processor, wherein the storage component stores a computer executable instruction set, when executed by the processor, performing the method for performing machine learning by using data to be exchanged.

Specifically, the computing device may be deployed in a server or a client, or may also be deployed on a node device in a distributed network environment. In addition, the computing device may be a PC computer, a tablet device, a personal digital assistant, a smart phone, a web application, or other device capable of executing the above instruction set.

Here, the computing device does not have to be a single computing device, but may also be any device or circuit assembly capable of executing the above instructions (or instruction set) individually or jointly. The computing device may also be a part of an integrated control system or system manager, or may be configured as a portable electronic device that is interconnected with local or remote (for example, via wireless transmission) by an interface.

In the computing device, the processor may include a central processing unit (CPU), a graphics processing unit (GPU), a programmable logic device, a dedicated processor system, a microcontroller, or a microprocessor. As an example and not a limitation, the processor may also include an analog processor, a digital processor, a microprocessor, a multicore processor, a processor array, and a network processor and so on.

Certain operations described in the method for performing machine learning by using data to be exchanged according to the exemplary embodiments of the present disclosure may be implemented by software, certain operations may be implemented by hardware, and in addition, these operations may be implemented by combination of software and hardware.

The processor may run instructions or codes stored in one of the storage components, wherein the storage components may also store data. Instructions and data may also be transmitted and received through a network via a network interface device, wherein the network interface device may employ any known transmission protocol.

The storage component may be integrated with the processor as one entity, for example, RAM or flash memory is arranged in an integrated circuit microprocessor and so on. In addition, the storage component may include an independent device, such as an external disk drive, a storage array, or any other storage device that may be used by a database system. The storage component and the processor may be coupled in operations, or may communicate with each other, for example, through an I/O port, a network connection, etc., so that the processor may read files stored in the storage component.

In addition, the computing device may also include a video display (such as a liquid crystal display) and a user interaction interface (such as a keyboard, a mouse, a touch input device, etc.). All components of the computing device may be connected to each other via a bus and/or a network.

An embodiment of the present disclosure also provides an apparatus for performing machine learning by using data to be exchanged including at least one computing device and at least one storage device storing instructions, wherein the instructions, when executed by the at least one computing device, cause the at least one computing device to perform the steps of the method described in any embodiment of the present disclosure. For example, the following steps are performed: receiving first primary encryption result data from a first data provider and receiving second primary encryption result data from a second data provider; transmitting the first primary encryption result data to the second data provider and transmitting the second primary encryption result data to the first data provider; receiving second secondary encryption result data from the first data provider and receiving first secondary encryption result data from the second data provider; and obtaining machine learning samples by concatenating the first secondary encryption result data and the second secondary encryption result data, and performing machine learning based on the machine learning samples.

The operations involved in the method for performing machine learning by using data to be exchanged according to the exemplary embodiments of the present disclosure may be described as various interconnected or coupled functional blocks or functional diagrams. However, these functional blocks or functional diagrams may be equally integrated into a single logic device or operate on imprecise boundaries.

Specifically, as described above, the computing device for performing machine learning by using data to be exchanged according to an exemplary embodiment of the present disclosure may include a storage component and a processor, wherein the storage component stores a computer executable instruction set, when executed by the processor, performing the following steps: receiving first primary encryption result data from a first data provider and receiving second primary encryption result data from a second data provider respectively, wherein the first primary encryption result data is obtained by the first data provider encrypting first data to be exchanged by using a first encryption function, and the second primary encryption result data is obtained by the second data provider encrypting second data to be exchanged by using a second encryption function, wherein the first data to be exchanged at least partially corresponds to the second data to be exchanged; transmitting the first primary encryption result data to the second data provider and transmitting the second primary encryption result data to the first data provider respectively; receiving second secondary encryption result data from the first data provider and receiving first secondary encryption result data from the second data provider respectively, wherein the first secondary encryption result data is obtained by the second data provider encrypting the first primary encryption result data by using the second encryption function, and the second secondary encryption result data is obtained by the first data provider encrypting the second primary encryption result data by using the first encryption function; and obtaining machine learning samples by concatenating the first secondary encryption result data and the second secondary encryption result data, and performing machine learning based on the machine learning samples.

It should be noted that the respective processing details of performing machine learning by using data to be exchanged according to the exemplary embodiments of the present disclosure have been described above with reference to FIGS. 1 to 3, and the processing details when the computing device performs the respective steps would not be repeated here.

The respective exemplary embodiments of the present disclosure have been described above, it should be understood that the above description is only exemplary, not exhaustive, and the present disclosure is not limited to the disclosed respective exemplary embodiments. Many modifications and variations will be obvious to those of ordinary skill in the art without departing from the scope and spirit of the present disclosure. Therefore, the protection scope of the present disclosure should be subject to the scope of the claims.

## Claims

1. An apparatus for performing machine learning by using data to be exchanged, comprises at least one computing device and at least one storage device storing instructions, wherein the instructions, when executed by the at least one computing device, cause the at least one computing device to perform the following steps:
receiving first primary encryption result data from a first data provider and receiving second primary encryption result data from a second data provider;
transmitting the first primary encryption result data to the second data provider and transmitting the second primary encryption result data to the first data provider;
receiving second secondary encryption result data from the first data provider and receiving first secondary encryption result data from the second data provider; and
obtaining machine learning samples by concatenating the first secondary encryption result data and the second secondary encryption result data, and performing machine learning based on the machine learning samples.

2. The apparatus of claim 1, wherein,
the first primary encryption result data is obtained by the first data provider encrypting first data to be exchanged by using a first encryption function, and the second primary encryption result data is obtained by the second data provider encrypting second data to be exchanged by using a second encryption function, wherein the first data to be exchanged at least partially corresponds to the second data to be exchanged;
the first secondary encryption result data is obtained by the second data provider encrypting the first primary encryption result data by using the second encryption function, and the second secondary encryption result data is obtained by the first data provider encrypting the second primary encryption result data by using the first encryption function.

3. The apparatus of claim 2, wherein each first data record to be exchanged among the first data to be exchanged includes at least identification information and attribute information, and each second data record to be exchanged among the second data to be exchanged includes at least identification information and label information about a machine learning target.

4. The apparatus of claim 2, wherein the first encryption function is a private function of the first data provider, the second encryption function is a private function of the second data provider, and the first encryption function and the second encryption function constitute one-way commutative private functions.

5. The apparatus of claim 2, wherein the first encryption function is a first power function with a first private big prime number, and the second encryption function is a second power function with a second private big prime number.

6. The apparatus of claim 1, wherein the machine learning samples are machine learning training samples, machine learning test samples, or machine learning prediction samples, and a machine learning executing unit trains a machine learning model, tests the machine learning model, or predicts using the machine learning model based on the machine learning samples.

7. A method for performing machine learning by a computing device using data to be exchanged, comprising:
receiving first primary encryption result data from a first data provider and receiving second primary encryption result data from a second data provider;
transmitting the first primary encryption result data to the second data provider and transmitting the second primary encryption result data to the first data provider;
receiving second secondary encryption result data from the first data provider and receiving first secondary encryption result data from the second data provider; and
obtaining machine learning samples by concatenating the first secondary encryption result data and the second secondary encryption result data, and performing machine learning based on the machine learning samples.

8. The method of claim 7, wherein,
the first primary encryption result data is obtained by the first data provider encrypting first data to be exchanged by using a first encryption function, and the second primary encryption result data is obtained by the second data provider encrypting second data to be exchanged by using a second encryption function, wherein the first data to be exchanged at least partially corresponds to the second data to be exchanged;
the first secondary encryption result data is obtained by the second data provider encrypting the first primary encryption result data by using the second encryption function, and the second secondary encryption result data is obtained by the first data provider encrypting the second primary encryption result data by using the first encryption function.

9. The method of claim 8, wherein each first data record to be exchanged among the first data to be exchanged includes at least identification information and attribute information, and each second data record to be exchanged among the second data to be exchanged includes at least identification information and label information about a machine learning target.

10. The method of claim 8, wherein the first encryption function is a private function of the first data provider, the second encryption function is a private function of the second data provider, and the first encryption function and the second encryption function constitute one-way commutative private functions.

11. The method of claim 8, wherein the first encryption function is a first power function with a first private big prime number, and the second encryption function is a second power function with a second private big prime number.

12. The method of claim 7, wherein the machine learning samples are machine learning training samples, machine learning test samples, or machine learning prediction samples, and the performing machine learning based on the machine learning samples comprises: training a machine learning model, testing the machine learning model, or predicting using the machine learning model based on the machine learning samples.

13. A data providing apparatus, comprising at least one computing device and at least one storage device storing instructions, wherein the instructions, when executed by the at least one computing device, cause the at least one computing device to perform the following steps:
encrypting first data to be exchanged by using a first encryption function to obtain first primary encryption result data, transmitting the first primary encryption result data to a machine learning executing apparatus, receiving second primary encryption result data from the machine learning executing apparatus, encrypting the second primary encryption result data by using the first encryption function to obtain second secondary encryption result data, and transmitting the second secondary encryption result data to the machine learning executing apparatus;
or, encrypting second data to be exchanged by using a second encryption function to obtain the second primary encryption result data, transmitting the second primary encryption result data to the machine learning executing apparatus, receiving the first primary encryption result data from the machine learning executing apparatus, encrypting the first primary encryption result data by using the second encryption function to obtain first secondary encryption result data, and transmitting the first secondary encryption result data to the machine learning executing apparatus.

14. The data providing apparatus of claim 13, wherein,
each first data record to be exchanged among the first data to be exchanged includes at least identification information and attribute information;
each second data record to be exchanged among the second data to be exchanged includes at least identification information and label information about a machine learning target.

15. The data providing apparatus of claim 13, wherein the first encryption function is a private function of a first data provider, the second encryption function is a private function of a second data provider, and the first encryption function and the second encryption function constitute one-way commutative private functions.

16. The data providing apparatus of claim 13, wherein the first encryption function is a first power function with a first private big prime number, and the second encryption function is a second power function with a second private big prime number.

17. A data providing method performed by a computing device, comprising:
encrypting first data to be exchanged by using a first encryption function to obtain first primary encryption result data, transmitting the first primary encryption result data to a machine learning executing apparatus, receiving second primary encryption result data from the machine learning executing apparatus, encrypting the second primary encryption result data by using the first encryption function to obtain second secondary encryption result data, and transmitting the second secondary encryption result data to the machine learning executing apparatus;
or, encrypting second data to be exchanged by using a second encryption function to obtain the second primary encryption result data, transmitting the second primary encryption result data to the machine learning executing apparatus, receiving the first primary encryption result data from the machine learning executing apparatus, encrypting the first primary encryption result data by using the second encryption function to obtain first secondary encryption result data, and transmitting the first secondary encryption result data to the machine learning executing apparatus.

18. The method of claim 17 wherein,
each first data record to be exchanged among the first data to be exchanged includes at least identification information and attribute information;
each second data record to be exchanged among the second data to be exchanged includes at least identification information and label information about a machine learning target.

19. The method of claim 17, wherein the first encryption function is a private function of a first data provider, the second encryption function is a private function of a second data provider, and the first encryption function and the second encryption function constitute one-way commutative private functions.

20. The method of claim 17, wherein the first encryption function is a first power function with a first private big prime number, and the second encryption function is a second power function with a second private big prime number.

21. A system for performing machine learning, comprising:
a first data provider apparatus configured to obtain first primary encryption result data by encrypting first data to be exchanged using a first encryption function;
a second data provider apparatus configured to obtain second primary encryption result data by encrypting second data to be exchanged using a second encryption function, wherein the first data to be exchanged at least partially corresponds to the second data to be exchanged;
a machine learning executing apparatus configured to receive the first primary encryption result data from the first data provider and receive the second primary encryption result data from the second data provider respectively, and transmit the first primary encryption result data to the second data provider and transmit the second primary encryption result data to the first data provider respectively,
wherein the first data provider obtains second secondary encryption result data by encrypting the second primary encryption result data using the first encryption function, the second data provider obtains first secondary encryption result data by encrypting the first primary encryption result data using the second encryption function, and the machine learning executing apparatus receives the second secondary encryption result data from the first data provider and receives the first secondary encryption result data from the second data provider respectively, and obtains machine learning samples by concatenating the first secondary encryption result data and the second secondary encryption result data, to perform machine learning based on the machine learning samples.

22. The system of claim 21, wherein each first data record to be exchanged among the first data to be exchanged includes at least identification information and attribute information, and each second data record to be exchanged among the second data to be exchanged includes at least identification information and label information about a machine learning target.

23. The system of claim 21, wherein the first encryption function is a private function of the first data provider, the second encryption function is a private function of the second data provider, and the first encryption function and the second encryption function constitute one-way commutative private functions.

24. The system of claim 21, wherein the first encryption function is a first power function with a first private big prime number, and the second encryption function is a second power function with a second private big prime number.

25. The system of claim 21, wherein the machine learning samples are machine learning training samples, machine learning test samples, or machine learning prediction samples, and the machine learning executing apparatus trains a machine learning model, tests the machine learning model, or predicts using the machine learning model based on the machine learning samples.

26. A method for performing machine learning, comprising:
obtaining first primary encryption result data by encrypting first data to be exchanged using a first encryption function, by a first data provider;
obtaining second primary encryption result data by encrypting second data to be exchanged using a second encryption function, by a second data provider, wherein the first data to be exchanged at least partially corresponds to the second data to be exchanged;
receiving the first primary encryption result data from the first data provider and receiving the second primary encryption result data from the second data provider respectively, and transmitting the first primary encryption result data to the second data provider and transmitting the second primary encryption result data to the first data provider respectively, by a machine learning executing apparatus;
obtaining second secondary encryption result data by encrypting the second primary encryption result data using the first encryption function, by the first data provider;
obtaining first secondary encryption result data by encrypting the first primary encryption result data using the second encryption function, by the second data provider;
receiving the second secondary encryption result data from the first data provider and receiving the first secondary encryption result data from the second data provider respectively, by the machine learning executing apparatus; and
obtaining machine learning samples by concatenating the first secondary encryption result data and the second secondary encryption result data to perform machine learning based on the machine learning samples, by the machine learning executing apparatus.

27. A computer-readable storage medium for performing machine learning by using data to be exchanged, wherein the computer-readable storage medium records computer programs for performing the method of any one of claims 7-12 and 17-20.

28. An apparatus for performing machine learning by using data to be exchanged, comprising:
a primary encryption data receiving unit configured to receive first primary encryption result data from a first data provider and receive second primary encryption result data from a second data provider;
a primary encryption data transmitting unit configured to transmit the first primary encryption result data to the second data provider and transmit the second primary encryption result data to the first data provider;
a secondary encryption data receiving unit configured to receive second secondary encryption result data from the first data provider and receive first secondary encryption result data from the second data provider; and
a machine learning executing unit configured to obtain machine learning samples by concatenating the first secondary encryption result data and the second secondary encryption result data, and perform machine learning based on the machine learning samples.
